# EUROPEAN PATENT APPLICATION

(11) **EP 4 122 816 A1**
(43) Date of publication of application: **25.01.2023**
(21) Application number: 21186989.6
(22) Date of filing: 21.07.2021
(51) Int. Cl.: B64C 1/40, B64C 1/14

(54) **SIDE WALL PORTION OF AN AIRCRAFT CABIN, FUSELAGE STRUCTURE AND AIRCRAFT HAVING THE SAME**

(71) Applicant: Airbus Operations GmbH, 21129 Hamburg (DE)
(72) Inventor: Linde, Peter, 21129 Hamburg (DE); Brodale, Camilla, 21129 Hamburg (DE)
(74) Representative: KASTEL Patentanwälte PartG mbB

(57) **Abstract**

In order to allow increase of the number of seats (22) in an abreast direction, the invention proposes a side wall portion (36) that has an integrated structural battery (74) and heating member (66). The side wall portion (36) has a plurality of solar cells (70) arranged on an inner circumferential surface of a window frame structure (58). The electrical energy produced by the solar cells (70) is stored in the structural battery (74) and output to the heating members (66), so as to heat the side wall portion (36). With this a thinner thermal insulation of the fuselage structure (30) is possible in the vicinity of the seats (22) so as to allow for an additional seat in the abreast direction.

## Description

The invention relates to a side wall portion of a cabin of an aircraft. The invention further relates to a fuselage structure for an aircraft and an aircraft.

In an effort to increase passenger capacity there is an idea to reduce the thickness of the frame. While structurally a non-issue, the reduced thickness may cause colder temperatures.

It is the objective of the invention to allow increase of the number of seats in an abreast direction.

The object is achieved by the subject-matter of the independent claims. Preferred embodiments are subject-matter of the dependent claims.

The invention provides a side wall portion of a cabin of an aircraft, the side wall portion comprising an energy source configured for supplying electrical energy; and a heating member electrically coupled to the energy source and configured for heating the side wall portion.

Preferably, the energy source includes at least one energy producer device configured for generating electrical energy.

Preferably, the energy producer device is a solar panel.

Preferably, the energy source includes at least one energy storage device configured for storing electrical energy.

Preferably, the energy storage device is a structural battery. Preferably, the structural battery is integrated into the side wall portion.

Preferably, the heating member includes a heating element that is integrated into the side wall portion.

Preferably, the side wall portion has a side wall lining and the energy source is integrated into the side wall lining.

Preferably, the side wall portion has a side wall lining and the heating member is integrated into the side wall lining.

Preferably, the side wall lining has a layer structure comprising a plurality of functional layers, and the energy source, preferably the energy storage device, and/or the heating member are formed by a portion of the functional layers.

Preferably, the heating member is arranged to be closer to a cabin interior, when the side wall portion is in operating condition.

Preferably, the energy storage device is arranged adjacent to the heating member and separated therefrom by an electrically isolating layer.

Preferably, the heating member comprises a partially coated carbon fiber, wherein the coating is electrically isolating.

Preferably, the layer structure comprises a back cover portion that is arranged further outward than any of the energy source, preferably the energy storage device, and/or the heating member.

Preferably, the back cover portion includes a foam layer that is arranged next to the energy source, preferably the energy storage device, and/or the heating member.

Preferably the back cover portion includes another foam layer that is arranged spaced apart from the foam layer.

Preferably, the/each foam layer has an isolating layer attached to it which separates the foam layer from an adjacent layer.

Preferably, the back cover portion includes a thermal insulation layer which is the outermost layer.

The invention provides a fuselage structure for an aircraft, the fuselage structure comprising an outer skin, a window frame structure, and at least one preferred side wall portion, wherein the outer skin and the side wall portion each have an opening for a window, wherein the window frame structure is arranged between the outer skin and the side wall portion at the location of the opening, and the energy source, preferably the energy producer device, is disposed on the window frame structure.

Preferably, the energy source, more preferably the energy producer device, is disposed on the window frame structure such that the energy producer device is accessible for light through the opening.

Preferably, the energy source is disposed on an inner circumferential surface of the window frame structure.

Preferably, the side wall portion has a smaller thickness than an adjacent fuselage portion.

Preferably, the fuselage structure further comprises a top fuselage portion and/or a bottom fuselage portion that are arranged adjacent to a first side wall portion and a second side wall portion.

Preferably, the side wall portions are arranged such that at seat level an inner diameter of the fuselage structure is larger than an inner diameter measured along a direction that does not intersect with the side wall portion.

Preferably, the outer skin and the side wall portion are spaced apart by a plurality of frames, clips, and/or stringers.

Preferably, foam is arranged between the outer skin and the side wall portion.

The invention provides an aircraft comprising a cabin, wherein a side wall of the cabin has at least one preferred side wall portion and/or wherein the aircraft comprises a preferred fuselage structure.

Embodiments of the invention are described in more detail with reference to the accompanying schematic drawings.

An idea of the invention is a device and method for heat dissipation in the sidewall lining by thin integrated heating elements, such as printed heating spirals, powered by solar cells, placed in the bright area between inner and outer window. The solar cells are capable of buffering energy into thin, structurally integrated batteries, integrated in the side wall lining. To reduce the energy consumption, each heating spiral is preferably placed adjacent to a structural battery, which dissipates some constant heat during discharging.

It may be noted that the solar cells are placed in the brightest location, which is still protected from the weather, and thus the most efficient cells can be chosen.

At first, cables enter to the battery from the solar cells that provide a charging function. Micro controllers determine extent of charging. From the battery a cable leads to the heating spiral, also via micro controllers, steered by temperature sensors.

It should be noted that the structural battery, preferably integrated in the side wall lining, itself dissipates energy thereby providing a surface temperature of up to + 35 °C. This allows reduction of the need for energy led into the heating spiral.

In another instance, the heating element may consist of a layer of carbon fiber reinforced plastic (abbreviated CFRP) material that is included in the inner cover of the sandwich side wall lining.

The invention may exhibit in particular any of the following advantages. It should be noted that not all advantages are required to be present at the same time or with the same intensity.

The ideas herein enable heating that reduces the cold air convection from thin thermal insulations, such as e.g. at reduced frame height (i.e. thereby enabling an increased number of seats abreast)

Furthermore, joule heating can be realized without system power cables to a board generator.

The preferred location for solar cells/panels is used, which is brightest available and protected from weather.

In an embodiment the heat dissipation from the structural battery layer within the side wall lining can be utilized to reduce the energy needed for the heating spirals.

Preferably, solar cells are attached in window frame. The structural batteries may be laminated into the side wall linings inner cover. Heating spirals can be printed on one of the CFRP layers. It is also possible that the CFRP layer in side wall lining's inner cover is used as the heating element, which preferably includes coated carbon fibers. Micro-controllers for controlling the system may be integrated into the electrical wiring.

The solar cells charge the structural batteries. The heating spirals, or CFRP heating layer exert the Joule effect when a temperature sensor triggers and the structural battery provides a basic temperature, thereby reducing energy need in heating element.

The invention is described in more detail with reference to the accompanying schematic drawings. Therein:
- Fig. 1: depicts an embodiment of an aircraft;
- Fig. 2: depicts a cross section of a fuselage of the aircraft;
- Fig. 3: depicts a detailed cross section of a side wall portion;
- Fig. 4: depicts an exemplary perspective view of a side wall portion;
- Fig. 5: depicts a more detailed view of the side wall portion; and
- Fig. 6: depicts a cross section of the side wall portion.

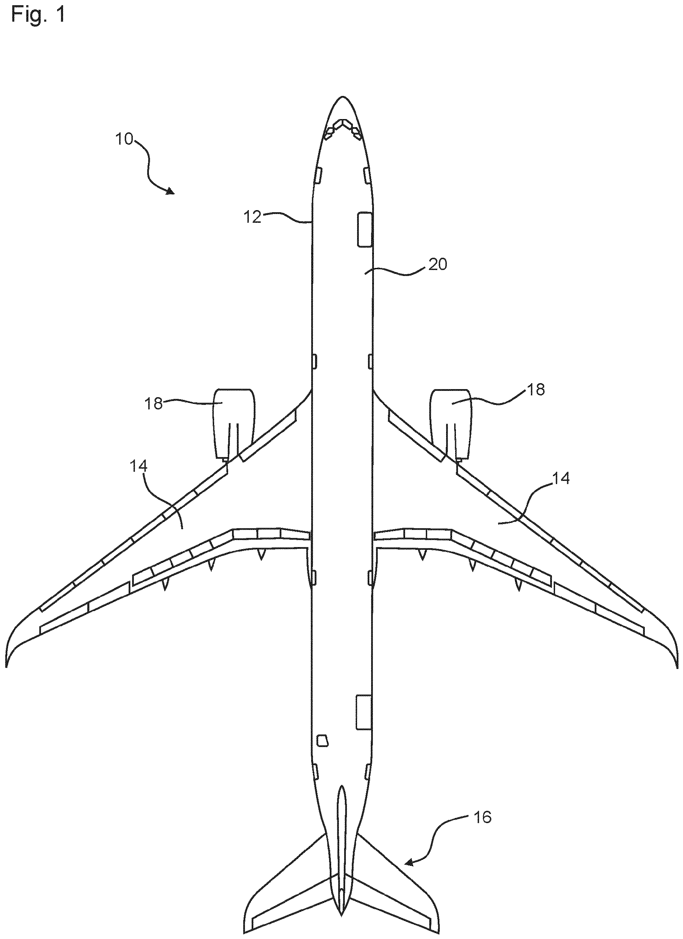

Fig. 1 illustrates an aircraft 10 having a fuselage 12. The aircraft 10 comprises a pair of wings 14 and a tail plane section 16. Furthermore, the aircraft comprises engines 18 for propulsion. The fuselage 12 comprises a cabin 20 for passengers.

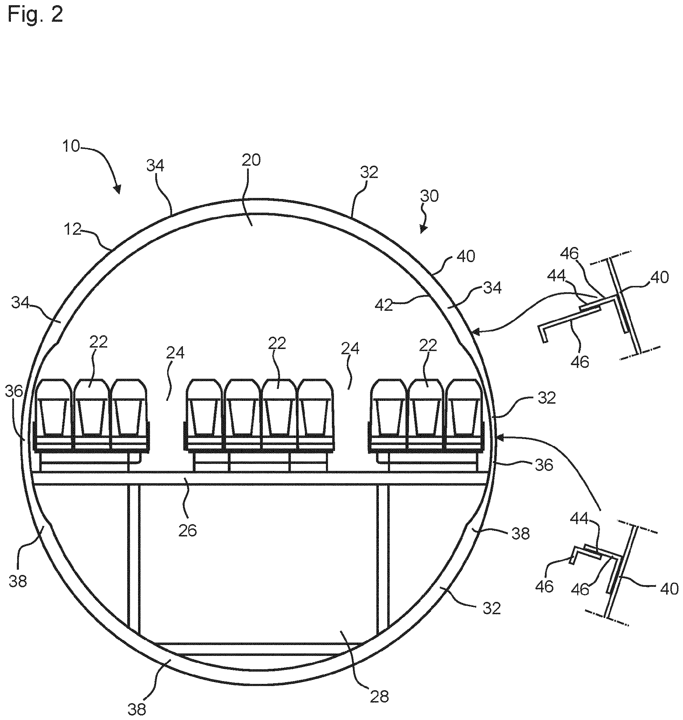

Fig. 2 shows a cross section in the abreast direction of the fuselage 12. The cabin 20 includes a plurality of seats 22 and aisles 24. Here, the seats 22 are arranged in a 3 - 4 - 3 pattern abreast. A floor 26 divides the cabin 20 from the cargo area 28, for example.

As depicted in Fig. 2, the fuselage 12 comprises a fuselage structure 30 having multiple fuselage portions 32 with different thickness. A top fuselage portion 34 forms the upper part of the cabin 20. The top fuselage portion 34 extends from a bit (one or two head sizes) above head height from the seats 22. The top fuselage portion 34 may have overhead compartments and other equipment typically arranged near the roof of the cabin 20. In the vicinity of the seats 22, the fuselage structure 30 comprises a side wall portion 36. The side wall portions 36 form the sides of the cabin 20. The side wall portions 36 extend from roughly below the floor 26 to a bit (one or two head sizes) above head height from the seats 22. The side wall portion 36 has a smaller thickness than the adjacent top fuselage portion 34 and a bottom fuselage portion 38 which forms the bottom of the cabin 20. The bottom fuselage portion 30 is part of the fuselage structure 30. The bottom fuselage portion 38 extends from below the floor 26. The bottom fuselage portion 38 supports the floor 26 from below. The bottom fuselage portion 38 encloses the cargo area 28.

The fuselage structure 30 comprises an outer skin 40 and an inner skin 42 that are space apart by I-stringers 44, for example. The I-stringers 44 may be formed from two pieces 46 that allow adjustment of the distance between the outer skin 40 and the inner skin 42. The I-stringers 44 allow for a smaller thickness of the side-wall portion 36 compared to the thickness of the top fuselage portion 34 and the bottom fuselage portion 38.

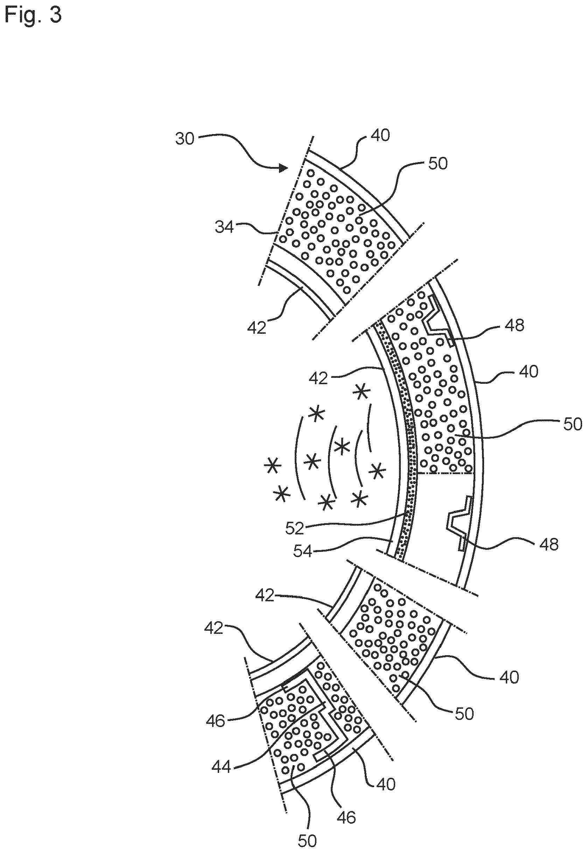

Fig. 3 depicts a cross section of a typical fuselage structure 30 in more detail. The fuselage structure 30 has the top and bottom fuselage portions 34, 38 and the side wall portion 36 arranged therebetween. The side wall portion 36 includes structural stiffeners, such as omega-stringers 48 that are attached to the outer skin 40.

Furthermore, the side wall portion 36 may include a thermal insulation 50. The thermal insulation 50 is arranged between the outer skin 40 and the inner skin 42.

The inner skin 42 may comprise an additional thermal insulation 52 that is arranged between a fuselage frame 56a or thermal insulation 50 and a side wall lining 54. The side wall lining 54 faces inward into the cabin 20.

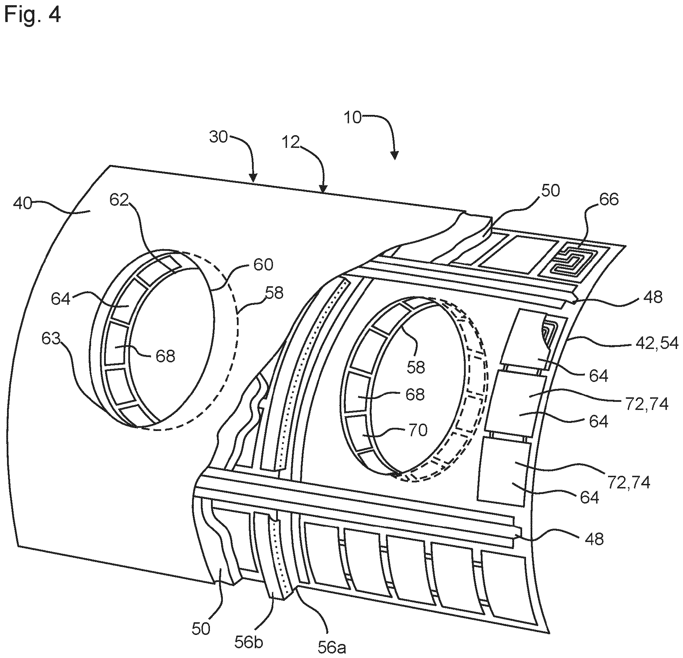

Referring to Fig. 4 through Fig. 6, the side wall portion 36 is described in more detail. The side wall portion 36 includes a fuselage frame 56a, a clip 56b and omega-stringers 48. In addition, the side wall portion 36 includes a window frame structure 58. The window frame structure 58 defines openings 60 for an inner window 62 and an outer window 63.

The side wall portion 36 includes an energy source 64 configured for producing and storing energy. The energy source 64 is electrically connected to a heating member 66 that is arranged on the inner skin 42, preferably the side wall lining 54.

The energy source 64 includes an energy producer device 68 which produces electrical energy. Here the energy producer device 68 includes a plurality of solar cells 70. The solar cells 70 are disposed on an inner circumferential surface of the window frame structure 58 and between the inner and outer windows 62, 63.

The energy source 64 further includes at least one energy storage device 72. The energy storage device 72 is disposed on the inner skin 42 or integrated into the inner skin 42, preferably the side wall lining 54. The energy storage device 72 is a structural battery 74 that may form part of the side wall lining 54.

The heating member 66 includes a heating element 76. The heating element 76 may be formed by coated carbon fibers or carbon fiber plies and use the Joule effect for generating heat. Furthermore, the energy storage device 72 may serve as a heating element 76, when charging/discharging.

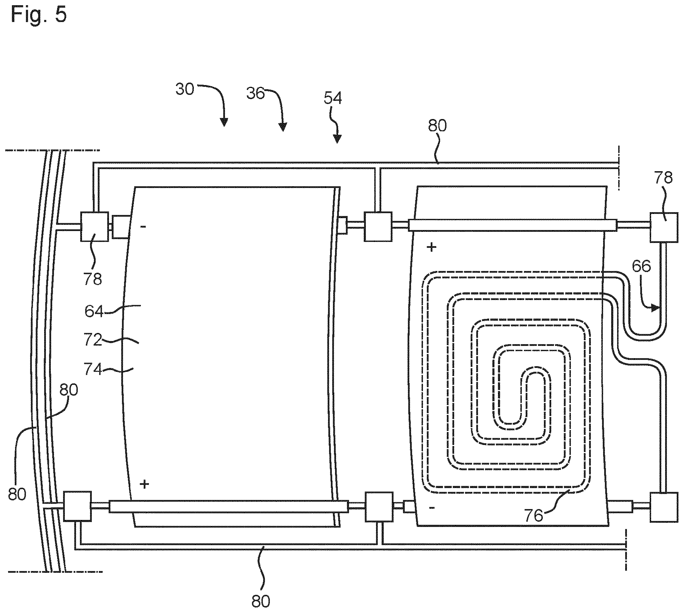

As shown more closely in Fig. 5, the side wall portion 36 may include one or more control devices 78 controlling the energy generation and storing process as well as the heating process. The energy producer device 68, the energy storage device 72 and the heating member 66 are connected via electrical cable 80 that are also coupled to the control devices 78.

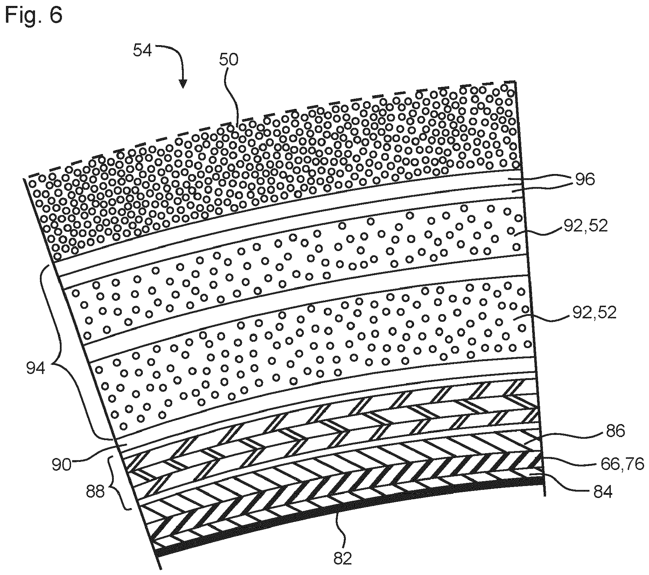

Fig. 6 illustrates the layer or laminate structure of the side wall lining 54, which will be described going outward from the cabin 20.

The innermost layer is usually a decor foil 82 that is visible for the passenger.

On top of the decor foil 82, there is usually an inner cover layer 84 that is made of a fiber composite, such as glass fiber reinforced plastic (abbreviated GFRP).

Next, the heating member 66 is arranged. Here the heating member 66 is formed by a heating layer that may include CFRP with coated carbon fibers. The carbon fibers may be shaped in a heating spiral configuration.

The heating member 66 has on top of it an electrically isolating layer 86 that is preferably made of GFRP.

The electrically isolating layer 86 isolates a plurality of structural battery layers 88, which form the structural battery 74 or energy storage device 72.

The energy storage device 72 is covered by another isolating layer 90 and/or an organo sheet material.

Next, one or more light weight foam layers 92 form a back cover 94 of the side wall lining 54.The back cover 94 is topped by one or more isolating layers 96 made of GFRP or organo sheet material.

Then the remainder of the inner skin 42 and side wall portion 36 are arranged on top of the back cover 94.

During operation the energy producer device 68 produces electrical energy which is stored in the energy storage device 72. The energy storage device 72 generates heat during charging. Subsequently, the control device 78 activates the heating member 66 up determining that a temperature threshold was met. With this a convenient temperature can be maintained in portions of the cabin 20 which have a thinner thermal insulation. Thus, the thickness of the fuselage structure 30 may be reduced to accommodate more seats 22 in the abreast direction.

In order to allow increase of the number of seats (22) in an abreast direction, the invention proposes a side wall portion (36) that has an integrated structural battery (74) and heating member (66). The side wall portion (36) has a plurality of solar cells (70) arranged on an inner circumferential surface of a window frame structure (58). The electrical energy produced by the solar cells (70) is stored in the structural battery (74) and output to the heating members (66), so as to heat the side wall portion (36). With this a thinner thermal insulation of the fuselage structure (30) is possible in the vicinity of the seats (22) so as to allow for an additional seat in the abreast direction.

### List of reference signs:

- 10: aircraft
- 12: fuselage
- 14: wing
- 16: tail plane section
- 18: engine
- 20: cabin
- 22: seat
- 24: aisle
- 26: floor
- 28: cargo area
- 30: fuselage structure
- 32: fuselage portion
- 34: top fuselage portion
- 36: side wall portion
- 38: bottom fuselage portion
- 40: outer skin
- 42: inner skin
- 44: I-stringer
- 46: piece
- 48: omega-stringer
- 50: thermal insulation
- 52: additional thermal insulation
- 54: side wall lining
- 56a: fuselage frame
- 56b: clip
- 58: window frame structure
- 60: opening
- 62: inner window
- 63: outer window
- 64: energy source
- 66: heating member
- 68: energy producer device
- 70: solar cell
- 72: energy storage device
- 74: structural battery
- 76: heating element
- 78: control device
- 80: electrical cable
- 82: decor foil
- 84: inner cover layer
- 86: isolating layer
- 88: structural battery layer
- 90: another isolating layer
- 92: foam layer
- 94: back cover
- 96: isolating layers

## Claims

1. A side wall portion (36) of a cabin (20) of an aircraft (10), the side wall portion (36) comprising an energy source (64) configured for supplying electrical energy; and a heating member (66) electrically coupled to the energy source (64) and configured for heating the side wall portion (36).

2. The side wall portion (36) according to claim 1, wherein the energy source (64) includes at least one energy producer device (68) configured for generating electrical energy.

3. The side wall portion (36) according to any of the preceding claims, wherein the energy source (64) includes at least one energy storage device (72) configured for storing electrical energy.

4. The side wall portion (36) according to any of the preceding claims, wherein the heating member (66) includes a heating element (76) that is integrated into the side wall portion (36).

5. The side wall portion (36) according to any of the preceding claims, wherein the side wall portion (36) has a side wall lining (54) and the energy source (64) and/or the heating member (66) is/are integrated into the side wall lining (54).

6. The side wall portion (36) according to claim 5, wherein the side wall lining (54) has a layer structure comprising a plurality of functional layers, and the energy source (64) and/or the heating member (66) are formed by a portion of the functional layers.

7. The side wall portion (36) according to claim 6, wherein the layer structure comprises a back cover portion (94) that is arranged further outward than any of the energy source (64) and/or the heating member (66).

8. A fuselage structure (30) for an aircraft (10), the fuselage structure (30) comprising an outer skin (40), a window frame structure (58), and at least one side wall portion (36) according to any of the preceding claims, wherein the outer skin (40) and the side wall portion (36) each have an opening (60) for a window (62, 63), wherein the window frame structure (58) is arranged between the outer skin (40) and the side wall portion (36) at the location of the opening (60), and the energy source (64) is disposed on the window frame structure (58).

9. The fuselage structure (30) according to claim 8, wherein the energy source (64) is disposed on the window frame structure (58) such that the energy producer device (64) is accessible for light through the opening (60).

10. The fuselage structure (30) according to claim 8 or 9, wherein the energy source (64) is disposed on an inner circumferential surface of the window frame structure (58).

11. The fuselage structure (30) according to any of the claims 8 to 10, wherein the side wall portion (36) has a smaller thickness than an adjacent fuselage portion (34, 38).

12. The fuselage structure (30) according to claim 11, further comprising a top fuselage portion (34) and/or a bottom fuselage portion (38) that are arranged adjacent to a first side wall portion (36) and a second side wall portion (36), wherein the side wall portions (36) are arranged such that at seat level an inner diameter of the fuselage structure (30) is larger than an inner diameter measured along a direction that does not intersect with the side wall portion (36).

13. The fuselage structure (30) according to any of the claims 8 to 12, wherein the outer skin (40) and the side wall portion (36) are spaced apart by a plurality of fuselage frames (56a), clips (56b), and/or stringers (46, 48).

14. The fuselage structure (30) according to any of the claims 8 to 13, wherein a thermal insulation (50) is arranged between the outer skin (40) and a part of the side wall portion (36) or the side wall portion (36).

15. An aircraft (10) comprising a cabin (20), wherein a side wall of the cabin (20) has at least one side wall portion (36) according to any of the claims 1 to 7 and/or wherein the aircraft (10) comprises a fuselage structure (30) according to any of the claims 8 to 14.
